# FASCICULE DE BREVET EUROPEEN

(11) **EP 0 575 215 B1**
(45) Date de publication et mention de la délivrance du brevet: **21.08.1996**
(21) Numéro de dépôt: 93401409.3
(22) Date de dépôt: 02.06.1993
(51) Int. Cl.: B60N 2/32, B60N 2/10, B60N 2/20

(54) **Siège et son application à un véhicule**
Sitz und seine Verwendung in einem Fahrzeug
Seat and its use in a vehicle

(30) Priorité: 10.06.1992 FR 9206997
(43) Date de publication de la demande: 22.12.1993
(73) Titulaire: CESA COMPAGNIE EUROPEENNE DE SIEGES POUR AUTOMOBILES, F-92307 Levallois-Perret Cédex (FR)
(72) Inventeur: Fourrey, François, F-25200 Montbeliard (FR); Gaurrand, Frédéric, F-70400 Hericourt (FR); Chabanne, Jean-Pierre, F-89710 Champvallon (FR); Harry, Sylvain, F-45270 Bellegarde (FR)
(74) Mandataire: Polus, Camille

(56) Documents cités:
- EP-A- 0 228 923
- FR-A- 2 556 946
- FR-A- 2 589 800
- FR-A- 2 625 955
- GB-A- 2 155 780
- US-A- 2 949 331
- US-A- 3 311 405
- US-A- 3 727 976

## Description

La présente invention concerne les sièges et, notamment, les sièges de véhicules automobiles terrestres aptes à occuper plusieurs positions de réglage de préférence prédéterminées.

La tendance contemporaine des constructeurs d'automobiles et de concevoir des véhicules dits "monospace" ou "un volume" ou encore "monocorps" qui tiennent à la fois de la conduite intérieure dite "break" et du véhicule utilitaire dit fourgonnette. Etant donné l'universalité d'utilisation visée par ces véhicules, il est nécessaire de les équiper de sièges aptes à prendre des positions multiples et variées de préférence prédéterminées c'est-à-dire aptes à prendre un certain nombre de positions discrètes et, chacune, bien définies.

On connaît en particulier dans l'état de la technique un siège à positions multiples, du type présentant au moins une position normale et une position de détente, notamment pour véhicule, constitué, entre autres, d'une assise avec une armature pour un coussin, d'un dossier avec une armature pour un coussin, d'un piètement destiné à faire reposer le siège sur un plancher, d'une articulation permettant de changer les positions relatives de ces coussins d'assise et de dossier, et d'une timonerie pour asservir les déplacements relatifs desdits coussins lors du changement de leurs positions relatives.

Des sièges de ce type sont décrits par exemple dans FR-A-2 556 946 et GB-A-2 155 780.

De tels sièges doivent par exemple pouvoir se déployer complètement en couchette s'il y a lieu, en fauteuil détente ou "relax", en siège normal dit de conduite ou de route, ou se déployer partiellement en tablette et doivent pouvoir aussi se rétracter pour se rabattre partiellement ou se replier totalement d'une manière compacte et relativement peu encombrante en vue de leur escamotage dans le véhicule ou de leur enlèvement de ce dernier.

De tels sièges doivent aussi satisfaire à des normes de sécurité édictées par des organismes professionnels ou les Pouvoirs Publics, de manière que l'occupant d'un siège soit retenu efficacement sur celui-ci par la ceinture de sécurité en cas de chocs violents notamment à grande composante longitudinale, repérée par rapport au véhicule.

Cette dernière contrainte devient particulièrement difficile à satisfaire lorsque, comme cela devient à être de plus en plus courant, une telle ceinture de sécurité n'est plus directement ancrée en deux ou trois points de la structure ou coque du véhicule, la ceinture de sécurité étant en quelque sorte indépendante du siège, mais au contraire cette ceinture fait corps avec le siège et est en quelque sorte "embarquée" sur celui-ci, les différents points d'ancrage de la ceinture de sécurité étant établis directement sur le siège lui-même. Dans une telle situation de ceinture embarquée, en cas de chocs violents, les efforts à absorber et/ou à transmettre se trouvent donc essentiellement localisés dans la zone de l'axe d'inclinaison relative du dossier et de l'assise du siège, d'une part, et dans la zone du piètement reliant habituellement l'assise du siège au plancher du véhicule, d'autre part.

On saisit toute la difficulté qu'il y a à satisfaire à l'ensemble de ces prescriptions, souvent contradictoires, en particulier lorsqu'on se souvent qu'un tel siège doit être produit en grande série et au moindre coût.

Une solution est exposée dans le document FR-A-2 689 739 (N° d'enregistrement national 92 04448 déposé le 12 avril 1992 au nom de la Demanderesse). Toutefois, cette solution ne convient pas à toutes les situations car les positions relatives des coussins changent relativement beaucoup.

Le but de l'invention est de remédier à la plupart de ces difficultés.

L'invention a pour objet un siège du type précité, caractérisé en ce qu'une articulation relie l'armature du dossier et le piètement et en ce qu'une timonerie comprend un embiellage fait, d'une part, d'une bielle haute avec deux extrémités dont la première est retenue et montée pivotante relativement à cette armature du dossier, et d'autre part, d'une bielle basse avec deux extrémités postérieure et antérieure dont l'extrémité postérieure est reliée et montée pivotante relativement à la seconde extrémité de cette bielle haute, cette bielle basse portant :
- l'armature de l'assise ;
- un compas fait, d'une part, d'une branche supérieure avec deux bouts dont le premier bout est retenu à proximité de l'extrémité antérieure de cette bielle basse et, d'autre part, d'une branche inférieure avec deux bouts dont le premier bout est relié et monté pivotant relativement au second bout de cette branche supérieure et le second bout est retenu et monté pivotant relativement au piètement ;
- une came qui présente un profil déterminé ; et
- une contre-came qui coopère avec cette came, où l'une de ces came et contre-came est associée à ce piètement et l'autre de ces came et contre-came est associée à cette bielle haute.

L'invention a aussi pour objet l'application d'un tel siège à un véhicule automobile terrestre, notamment du type dit "monospace" ou "un volume" ou "monocorps".

D'autres caractéristiques de l'invention ressortiront de la lecture de la description et des revendications qui suivent ainsi que de l'examen du dessin annexé, donné seulement à titre d'exemple, où :
- la Figure 1 est une vue perspective partielle et schématique d'un mode de réalisation d'un siège suivant l'invention;
- les Figures 2A et 2B sont des vues respectivement de côté et de face, en élévation du mode de réalisation de la Figure 1 en position intermédiaire;
- la Figure 3 est une vue schématique partielle de détail analogue à celle de la Figure 2A de ce siège en position couchette;
- la Figure 4 est une vue analogue en position détente ou "relax";
- la Figure 5 est une vue analogue en position intermédiaire;
- la Figure 6 est une vue analogue en position normale dite de route ou de conduite;
- la Figure 7 est une vue analogue en position tablette;
- la Figure 8 est une vue analogue en position "compacte";
- la Figure 9 est une vue analogue en position rabattue ou repliée; et
- la Figure 10 est une vue analogue à celle de la Figure 6 d'un autre mode de réalisation d'un siège suivant l'invention.

Les sièges articulés ou à positions multiples, notamment destinés à des véhicules, par exemple automobiles terrestres, étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour désigner un élément homologue quel que soit le mode de réalisation ou sa variante d'exécution.

Pour la commodité de l'exposé, on décrira successivement chacun des constituants d'un siège perfectionné selon l'invention avant d'en décrire au besoin la fabrication et l'assemblage, et son fonctionnement.

Comme on le voit, d'une manière classique, un siège selon l'invention est destiné à reposer sur un sol ou un plancher P de préférence d'un véhicule automobile terrestre.

Un tel siège étant, le plus souvent, symétrique par rapport à un plan médian parallèle à un plan passant par l'axe longitudinal du véhicule, il suffira d'en décrire et/ou illustrer l'un des côtés, le côté droit ou le côté gauche. Il est clair toutefois que cette symétrie n'est pas absolument nécessaire et que certains des constituants du siège selon l'invention peuvent n'être situés que d'un seul côté. Les indications faisant références à une orientation, telles haute, basse, supérieure, inférieure, antérieure, postérieure, avant, arrière, latéral par exemple se rapportent à un siège placé normalement dans un véhicule.

Un tel siège comprend, essentiellement, une assise 10, un dossier 20, un piètement 30, une articulation 40 et une timonerie 50.

Comme on le voit, l'assise 10 comprend une armature 11 destinée à recevoir un coussin 13. Tout ceci est classique et on ne s'y étendra pas davantage. On observera toutefois que cette armature 11 se présente essentiellement comme un cadre ou similaire avec des supports 111, avant et arrière, et s'il y a lieu des supports 112 latéraux. C'est un tel cadre qui recevra la nappe de suspension élastique du coussin avec sa matelassure et son habillage. Le dossier 20 comprend lui aussi une armature 21 destinée à recevoir un coussin 23. Tout ceci est classique.

Pour les raisons qui apparaîtront par la suite, il y a lieu d'observer que l'armature 21 du dossier est directement montée sur le piètement 30 par l'entremise de l'articulation 40 alors que cela n'est pas le cas de l'armature 11 de l'assise qui n'est pas directement reliée au piètement 30. Cela ressortira clairement de la suite.

Le piètement 30 qui permet de faire reposer le siège sur le sol ou sur le plancher P, comprend au moins un pied 31 avant et au moins un pied 32 arrière. Dans le mode de réalisation représenté, on observera que le pied avant 31 est fait avec une extension en direction de l'armature du dossier 21 et on observera aussi que le pied arrière 32 est monté mobile sur le pied avant 31 à l'aide d'une articulation comme illustré.

S'il y a lieu, comme cela est classique, au moins l'un des pieds est relié au plancher à l'aide de systèmes de montage et de fixations courants de tout type approprié qui permettent de faire basculer le siège et, au besoin de le séparer du plancher de manière à le rendre amovible. Ceci est connu.

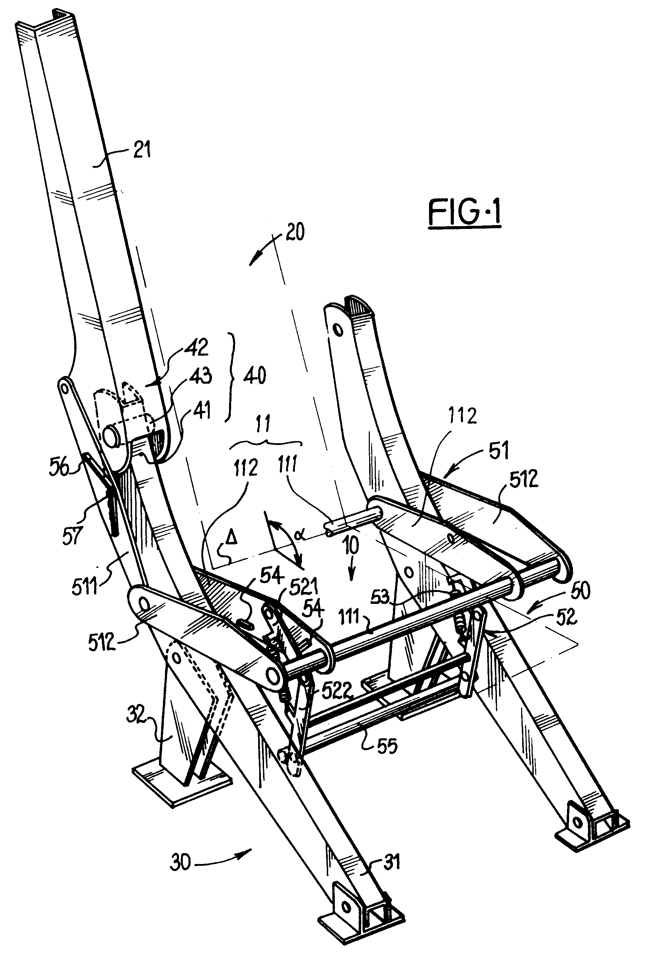

L'articulation 40 comprend une ferrure 41 qui fait corps ou qui est rapportée sur le piètement 30, son pied avant 31 par exemple ainsi qu'une ferrure 42 qui, de même, fait corps ou est rapportée sur l'armature 21 de dossier. Cette articulation comprend aussi un axe 43 qui permet de modifier les inclinaisons relatives de l'assise 10 et du dossier 20. Sur la Figure 1, le coussin 13 de l'assise 10 et le coussin 23 du dossier 20 sont schématisés par deux plans en trait discontinu qui se coupent selon une arête Δ en formant un dièdre d'angle α. Ceci est classique et l'on ne s'y étendra pas plus amplement.

La timonerie 50 comprend, entre autres, un embiellage 51, un compas 52, et s'il y a lieu une sollicitation élastique 53, des butées 54 et un arrêtoir 55; cette timonerie comprend aussi une came 56 associée à une contre-came 57, comme on le voit à l'examen des figures du dessin.

L'embiellage 51 comprend une bielle 511 haute avec, d'une part, une extrémité 5111 qui est retenue et montée pivotante relativement à cette armature 21 du dossier à l'aide d'une articulation d'un type quelconque faite, par exemple, d'un axe et d'au moins une portée telle une cheville et des trous, et avec, d'autre part, une extrémité 5112 libre. Cet embiellage 51 comprend aussi une bielle 512 basse avec, d'une part, une extrémité 5121 antérieure et, d'autre part, avec une extrémité 5122 postérieure qui est reliée et montée pivotante relativement à l'extrémité libre 5112 de la bielle haute 511. Comme précédemment indiqué, cette articulation est de tout type classique.

Comme on l'observera, la bielle basse 512 porte l'un des supports 111 qui est destiné à recevoir directement ou par l'intermédiaire d'un berceau ou similaire, le coussin 13 de l'assise 10 de manière à rendre l'armature et son coussin solidaire de la bielle basse pour faire corps avec elle dans tous ses déplacements. La bielle basse 512 peut aussi servir directement de support latéral 112.

Le compas 52 comprend, d'une part, une branche 521 supérieure avec un bout 5211 qui est retenu à proximité de l'extrémité antérieure 5121 de la bielle basse 512 et s'il y a lieu monté pivotant relativement à celle-ci et, d'autre part, un bout 5212 libre. Ce compas 52 comprend aussi une branche 522 inférieure avec, d'une part, un bout 5222 libre qui est relié et monté pivotant relativement au bout libre 2212 de la branche supérieure 521 et avec, d'autre part, un bout 5221 qui est retenu et monté pivotant relativement au piètement 30, plus spécialement à son pied avant 31, et s'il y a lieu qui est pourvu d'un prolongement 5223. Ce qui a été dit précédemment à propos des articulations vaut aussi encore.

La sollicitation élastique 53 facultative agit sur les branches 521 et 522 du compas 52 de manière à tendre à les refermer. Cette sollicitation élastique est par exemple, exercée par un ressort, en particulier un ressort à boudin, dont chacune des extrémités est ancrée sur une patte ou similaire de chacune des branches du compas, comme illustré.

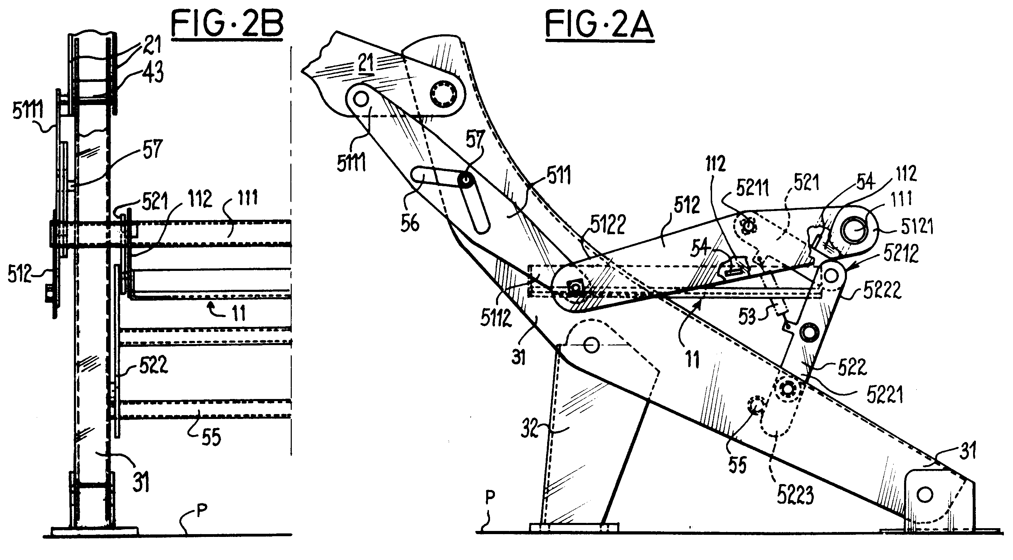

S'il y a lieu, des butées 54, deux dans ce mode de réalisation, sont placées sur la bielle basse 512, de part et d'autre de la branche supérieure 521 du compas lorsqu'elle est pivotante pour en limiter les débattements dans les deux sens, comme cela apparaît en particulier à l'examen de la Figure 2A.

S'il y a lieu l'arrêtoir 55 est placé sur le piètement 30, plus spécialement sur le pied avant et est situé d'un côté du prolongement 5223 facultatif de la branche inférieure 522 du compas 52 pour en limiter le débattement. Cet arrêtoir est, par exemple, fait d'un tube ou d'une traverse qui relie les deux côtés du piètement 30 ou les deux pieds avant 31, de manière à augmenter la rigidité.

La came 56, qui est de préférence associée à la bielle haute 511, est solidaire de celle-ci soit par ce qu'elle y est usinée, soit parce qu'elle y est rapportée et fixée de toute manière appropriée par exemple rivetage, soudage, collage, etc. Cette came présente un profil 521 déterminé par exemple en Vé obtus, comme dessiné. Cette came se présente, par exemple, à la manière d'une fente s'il y a lieu coudée de manière à avoir un profil double. La contre-came 57, qui coopère avec la came 56, est associée de préférence au piètement 30, de préférence au pied avant 31. Cette contre-came 57 se présente, par exemple, à la manière d'un tourillon ou d'un téton engagé dans la fente de la came 56. Comme on le comprendra par la suite, la came 56 et la contre-came 57 assurent avec le reste de la timonerie l'asservissement des déplacements relatifs du coussin d'assise et du coussin de dossier lors du changement de leurs positions relatives. La localisation particulière des came et contre-came peut être inversée, la came étant associée au piètement et la contre-came à la bielle haute.

Comme on l'observera, pour des questions d'encombrement et aussi de robustesse, le compas 52 est monté du côté intérieur du piètement alors que l'embiellage 51 est monté au moins partiellement du côté extérieur de celui-ci.

Comme on peut le noter pour le mode de réalisation illustré, la timonerie 50 est double et est associée à chacun des côtés droit et gauche d'un siège. Mais il est clair que suivant le cas, une seule timonerie peut être utilisée.

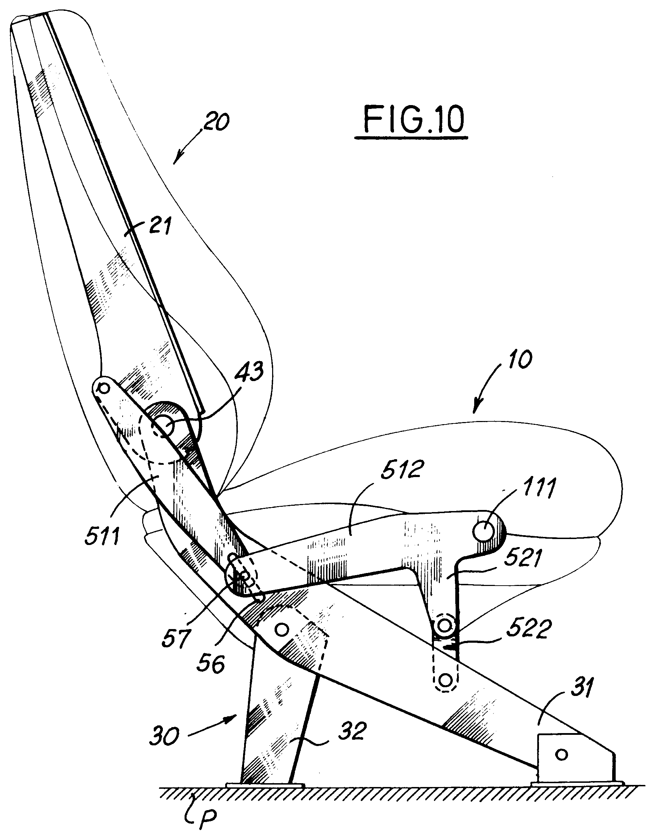

La Figure 10 illustre un autre mode de réalisation d'un siège suivant l'invention.

Par rapport au mode de réalisation représenté sur les figures précédentes, ce nouveau mode de réalisation s'en distingue notamment par le fait que la came 56 est rectiligne et associée au piètement 30, la contre-came 57 est associée à la bielle haute 511, la branche supérieure 521 du compas est montée fixe à proximité de l'extrémité antérieure 5121 de la bielle basse 512. Ce nouveau mode de réalisation s'en distingue aussi par le fait que le bout 5221 de la branche inférieure 522 du compas 52 ne comprend pas de prolongement et qu'on n'utilise pas de sollicitation élastique, de butées et d'arrêtoir.

Ce mode de réalisation n'est pas conçu pour avoir une position couchette.

On observera que pour ce mode de réalisation la contre-came 57 est confondue avec l'articulation qui relie l'extrémité libre 5112 de la bielle haute 511 à l'extrémité postérieure 5122 de la bielle basse 512.

Afin de permettre les changements d'inclinaisons relatives de l'assise et du dossier, l'articulation 40 est munie d'un dispositif de réglage et d'un mécanisme de verrouillage. Ces dispositifs et mécanismes, de tout type courant classique, permettent à l'utilisateur de modifier puis d'immobiliser le siège dans chacune des diverses positions multiples possibles. Un exemple de tels dispositifs et mécanismes est par exemple divulgué par le document FR 92 02 172 déposé le 25 février 1992 auquel on pourra se reporter utilement.

Tous les constituants d'un siège selon l'invention, à l'exception de ses coussins, sont faits pour tout ou partie en métal ou en matières synthétiques qui sont travaillées et mises en forme selon des techniques traditionnelles. Lorsqu'on utilise des pièces métalliques, celles-ci sont par exemple obtenues à partir de barres, tubes, profilés ou feuillards, flans travaillés par emboutissage, découpe, pliage ou similaires comme il est bien connu. Lorsqu'on utilise des matières synthétiques, celles-ci sont au besoin garnies de charges ou de fibres appropriées pour leur conférer les propriétés mécaniques requises et sont configurées par exemple par moulage ou thermoformage.

Tous les éléments précédemment décrits sont réunis, assemblés et montés comme cela ressort des figures du dessin.

Pour passer de l'une des positions multiples et diverses dans laquelle le siège a été placé à une autre désirée, on agit d'abord sur le mécanisme de verrouillage dont il a été précédemment question afin de libérer le dispositif de réglage en inclinaison dont il a été aussi précédemment question. On manoeuvre alors par exemple le dossier, en le poussant ou en le tirant en direction de la nouvelle position à lui donner. Cette nouvelle position atteinte, le mécanisme de verrouillage, spontanément ou après avoir été relâché, immobilise alors le siège dans sa nouvelle position.

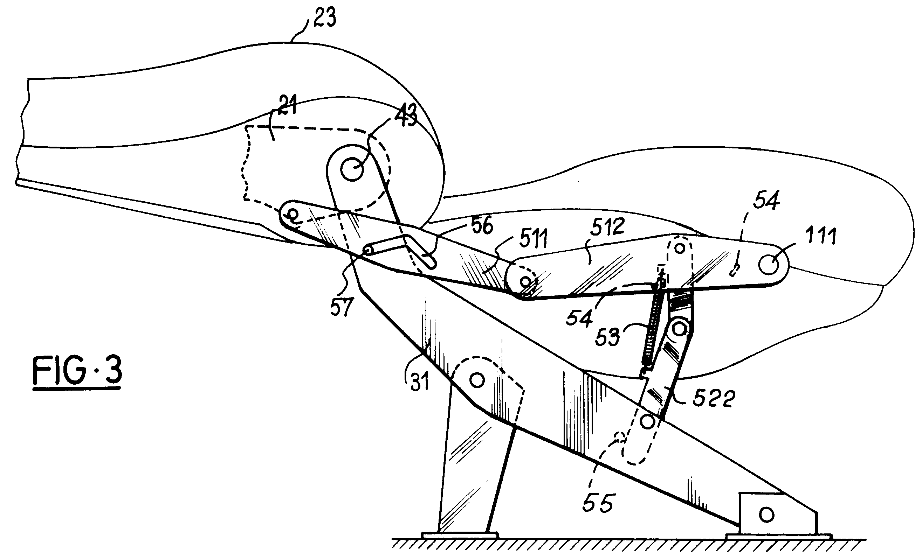

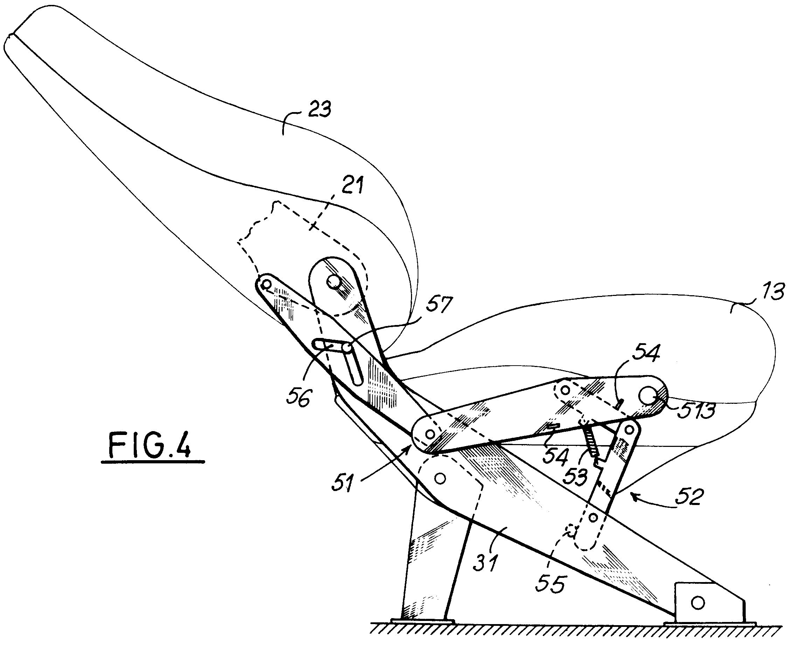

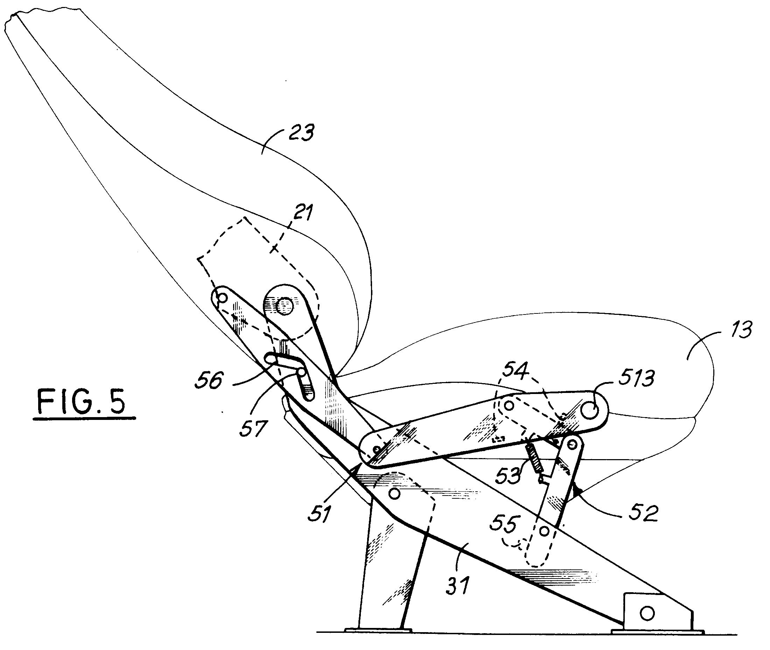

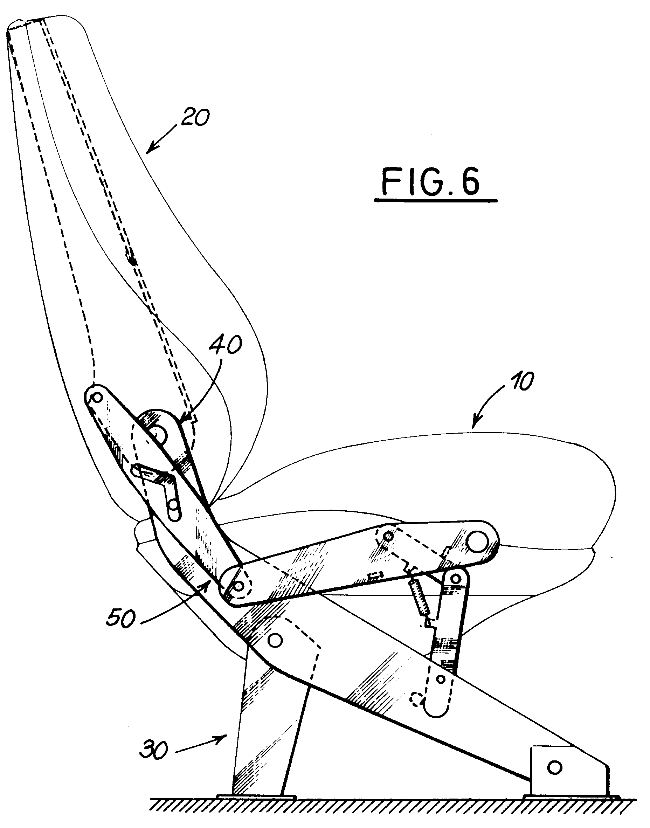

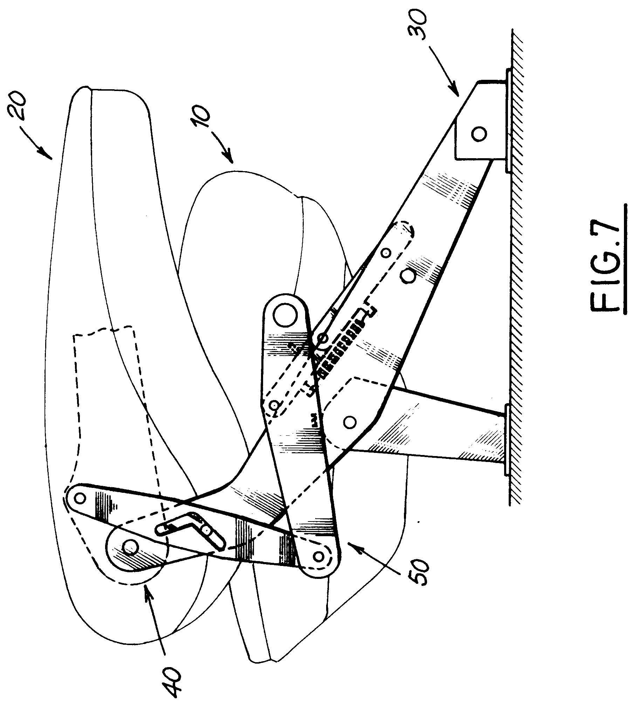

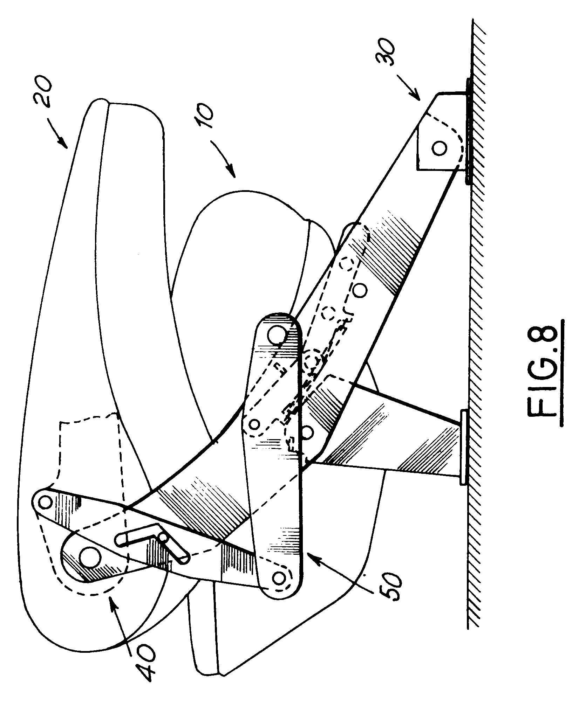

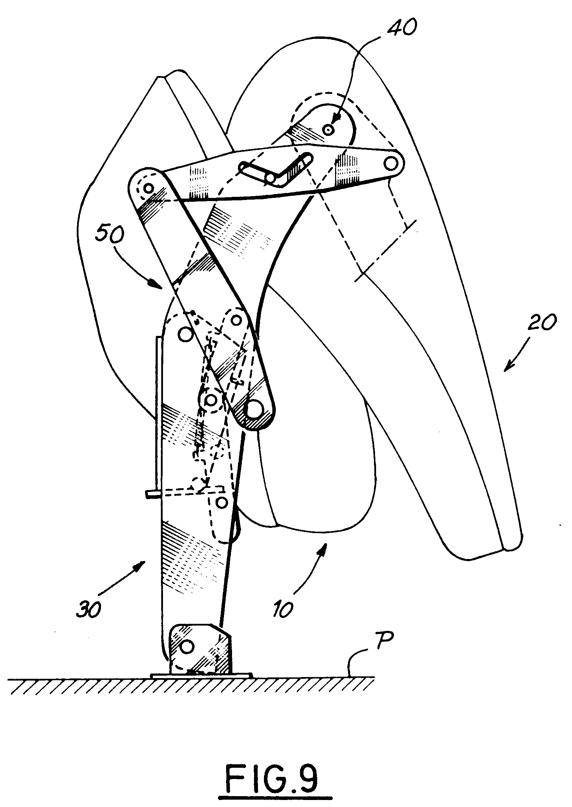

En examinant les diverses figures du dessin, on comprend que la timonerie asservit les déplacements de l'assise à ceux du dossier. Au cours de ces déplacements relatifs, on voit que l'angle α du dièdre que forme les plans de l'assise et du dossier, soit se modifie, soit reste pratiquement constant. Cette situation où l'angle α reste pratiquement constant est celle qui correspond aux positions dites soit normale ou soit de détente, puisqu'on observe qu'alors l'assise et le dossier restent pratiquement dans une position relative immuable mais basculent ensemble par un mouvement de pivotement selon un axe horizontal, c'est-à-dire perpendiculaire au plan de la feuille du dessin des Figures 2 à 9.

Le fait que l'angle α reste pratiquement constant pour les positions normale et détente est important. En effet, c'est pour ces positions que l'occupant du siège est porteur de sa ceinture de sécurité lorsque le véhicule est en circulation. Et c'est dans une telle situation qu'un choc à composante longitudinale importante risque de survenir, choc qui s'il est frontal risque de faire glisser le passager sur le siège en le faisant échapper malgré lui à la retenue de la ceinture de sécurité puisque ses cuisses ont tendance à glisser sur le coussin d'assise et son torse et son bassin ont tendance à passer sous les brins thoracique et abdominal de la ceinture de sécurité.

Un siège suivant l'invention trouve une application notamment dans les véhicules dits "monospace" ou "un volume" ou "monocorps". Lorsqu'un tel siège est en position repliée rabattue, il présente une configuration compacte d'encombrement minimal qui permet de libérer de la surface au sol pour charger des objets volumineux sur le plancher ou bien pour faciliter l'enlèvement du siège complet du véhicule.

On observera que le profil déterminé de la came lorsqu'il est coudé permet d'obtenir une position dite "couchette". Pour le cas où ce profil est en Vé obtus c'est la partie de la came qui évolue à proximité de l'horizontale qui fixe alors cette position. Il est clair toutefois que la position couchette n'est pas indispensable.

On comprend tout l'intérêt qu'offre et les avantages que procure le siège selon l'invention, en particulier lorsqu'un tel siège est équipé d'une ceinture de sécurité dont les points d'ancrage sont directement fixés sur lui, ceinture dite embarquée.

## Revendications

1. Siège à positions multiples, du type présentant au moins une position normale et une position de détente, notamment pour véhicule, constitué, entre autres, d'une assise (10) avec une armature (11) pour un coussin (13), d'un dossier (20) avec une armature (21) pour un coussin (23), d'un piètement (30) destiné à faire reposer le siège sur un plancher, d'une articulation (40) permettant de changer les positions relatives de ces coussins (13, 23) d'assise et de dossier, et d'une timonerie (50) pour asservir les déplacements relatifs desdits coussins (13, 23) lors du changement de leurs positions relatives, caractérisé en ce que cette articulation (40) relie l'armature (21) du dossier et le piétement (30) et en ce que cette timonerie (50) comprend un embiellage (51) fait, d'une part, d'une bielle haute (511) avec deux extrémités (5111, 5112) dont la première (5111) est retenue et montée pivotante relativement à cette armature (21) du dossier, et d'autre part, d'une bielle basse (512) avec deux extrémités postérieure (5122) et antérieure (5121) dont l'extrémité postérieure (5122) est reliée et montée pivotante relativement à la seconde extrémité (5112) de cette bielle haute (511), cette bielle basse (512) portant :
- l'armature (11) de l'assise ;
- un compas (52) fait, d'une part, d'une branche supérieure (521) avec deux bouts (5211, 5212) dont le premier bout (5211) est retenu à proximité de l'extrémité antérieure (5121) de cette bielle basse (512) et, d'autre part, d'une branche inférieure (522) avec deux bouts (5222, 5221) dont le premier bout (5222) est relié et monté pivotant relativement au second bout (5212) de cette branche supérieure (521) et le second bout (5221) est retenu et monté pivotant relativement au piètement (30) ;
- une came (56) qui présente un profil déterminé ; et
- une contre-came (57) qui coopère avec cette came (56), où l'une de ces came (56) et contre-came (57) est associée à ce piètement (30) et l'autre de ces came (56) et contre-came (57) est associée à cette bielle haute (511).

2. Siège selon la revendication 1, caractérisé en ce que ce compas (52) est monté du côté intérieur du piètement (30).

3. Siège selon l'une quelconque des revendications 1 et 2, caractérisé en ce que cet embiellage (51) est monté du côté extérieur du piètement (30).

4. Siège selon l'une quelconque des revendications 1 et 2, caractérisé en ce que cette came (56) est portée par cette bielle haute (511) et cette contre-came (57) est associée au piètement (30).

5. Siège selon l'une quelconque des revendications 1 à 4, caractérisé en ce que cette timonerie (50) est double et est associée aux côtés droit et gauche d'un siège.

6. Siège selon l'une quelconque des revendications 1 à 5, caractérisé en ce que le piètement (30) comprend au moins un pied (31) avant et au moins un pied (32) arrière, en ce que ce pied avant (31) porte cette articulation (40) et cette branche inférieure (522) et en ce que ce pied arrière (32) est monté mobile sur cette armature d'assise (11).

7. Siège selon l'une quelconque des revendications 1 à 6, caractérisé en ce que ce piètement (30) est monté mobile voire amovible sur un plancher.

8. Siège selon l'une quelconque des revendications 1 à 7, caractérisé en ce que le profil (561) de la came (56) est en Vé obtus.

9. Siège selon l'une quelconque des revendications 1 à 8, caractérisé en ce que le bout (5211) de la branche supérieure (521) du compas (52) est montée pivotante à proximité de l'extrémité antérieure (5121) de cette bielle basse (512), en ce que le bout (5221) de cette branche inférieure (522) est pourvu d'un prolongement (5223), en ce qu'il comprend une sollicitation élastique (53) agissant sur ces branches (521, 522) du compas (52) et tendant à les refermer, des butées (54) qui sont placées sur cette bielle basse (512) et de part et d'autre de cette branche supérieure (521) pour en limiter les débattements, un arrêtoir (55) qui est placé sur ce piètement (30) et d'un côté de ce prolongement (5223) pour en limiter le débattement.

10. Application d'un siège conforme à l'une quelconque des revendications 1 à 9 à un véhicule automobile terrestre notamment du type dit "un volume" ou "monospace".

## Claims

1. Multiple-position seat of the type having at least one normal position and one resting position, notably for a vehicle, consisting, amongst other things, of a squab (10) with a frame (11) for a cushion (13), a backrest (20) with a frame (21) for a cushion (23), an underframe (30) designed to allow the seat to rest on a floor, a pivot (40) enabling the relative positions of these squab and backrest cushions (13, 23) to be changed, and a linkage (50) for controlling the relative movements of the said cushions (13, 23) when their relative positions are changed, characterised in that this pivot (40) connects the frame (21) of the backrest to the underframe (30) and in that this linkage (50) comprises an assembly (51) formed, firstly, by an upper link (511) with two extremities (5111, 5112), the first of which (5111) is held and mounted so as to pivot in relation to this frame (21) of the backrest, and secondly a lower link (512) with two extremities, back (5122) and front (5121), the back extremity of which (5122) is connected and mounted so as to pivot in relation to the second extremity (5112) of this upper link (511), this lower link (512) carrying:
- the frame (11) of the squab;
- compass arms (52) formed, firstly, by an upper arm (521) with two ends (5211, 5212), the first end of which (5211) is held in the vicinity of the front extremity (5121) of this lower link (512) and, secondly, by a lower arm (522) with two ends (5222, 5221), the first end (5222) of which is connected and mounted so as to pivot with respect to the second end (5212) of this upper arm (521) and the second end (5221) of which is held and mounted so as to pivot in relation to the underframe (30);
- a cam (56) which has a predetermined profile; and
- a cam follower (57) which cooperates with this cam (56), where either one of this cam (56) or this cam follower (57) is associated with the said underframe (30) and the other one of this cam (56) and this cam follower (57) is associated with the said upper link (511).

2. Seat according to Claim 1, characterised in that the said compass arms (52) are mounted on the inside of the underframe (30).

3. Seat according to either one of Claims 1 and 2, characterised in that the said assembly (51) is mounted on the outside of the underframe (30).

4. Seat according to either one of Claims 1 and 2, characterised in that the said cam (56) is carried by the said upper link (511) and the said cam follower (57) is associated with the underframe (30).

5. Seat according to any one of Claims 1 to 4, characterised in that the said linkage (50) is a double one and is associated with the right- and left-hand sides of a seat.

6. Seat according to any one of Claims 1 to 5, characterised in that the underframe (30) comprises at least one front leg (31) and at least one rear leg (32), in that this front leg (31) carries the said pivot (40) and the said lower arm (522) and in that this rear leg (32) is movably mounted on the said squab frame (11).

7. Seat according to any one of Claims 1 to 6, characterised in that the said underframe (30) is movably or even removably mounted on a floor.

8. Seat according to any one of Claims 1 to 7, characterised in that the profile (561) of the cam (56) is in the shape of an obtuse V.

9. Seat according to any one of Claims 1 to 8, characterised in that the end (5211) of the upper arm (521) of the compass arms (52) is pivotally mounted in the vicinity of the front extremity (5121) of the said lower link (512), in that the end (5221) of the said lower arm (522) is provided with an extension (5223), in that it comprises an elastic force (53) acting on these arms (521, 522) of the compass arms (52) and tending to close them up, stops (54) which are positioned on the said lower link (512) and on each side of the said upper arm (521) so as to limit the movements thereof, and an arrestor (55) positioned on this underframe (30) and to one side of this extension (5223) to limit the movement thereof.

10. Application of a seat in accordance with any one of Claims 1 to 9 of a motor vehicle running on land notably of the type known as a "space wagon" or "multipurpose vehicle".

## Patentansprüche

1. Mehrstellungssitz einer Art, welche wenigstens eine Normalstellung und eine Entspannungsstellung aufweist, insbesondere für ein Fahrzeug, und gebildet unter anderem aus einem Sitzteil (10) mit einer Bewehrung (11) für ein Polster (13), einer Rückenlehne (20) mit einer Bewehrung (21) für ein Polster (23), einem Gestell (30), welches dazu bestimmt ist, den Sitz auf einem Boden aufruhen zu lassen, einem Gelenk (40), welches eine Veränderung der Relativlagen der Sitz- und Rückenpolster (13, 23) gestattet, und einem Gestänge (50) zum Steuern der Relativversetzungen der Kissen (13, 23) bei einer Änderung ihrer Relativlagen, dadurch gekennzeichnet, daß dieses Gelenk (40) die Bewehrung der Rückenlehne (21) und das Gestell (30) verbindet und daß dieses Gestell (50) einen Stangensatz (51) aufweist, des einerseits aus einem oberen Glied (511) mit zwei Enden (5111, 5112), von denen das erste (5111) schwenkbar in Bezug auf die Bewehrung (21) der Rückenlehne gehalten und angebracht ist, und andererseits aus einem unteren Glied (512) mit einem hinteren (5122) und einem vorderen (5121) Ende, dessen hinteres Ende (5122) schwenkbar in Bezug auf das zweite Ende (5112) des oberen Glieds (511) angeschlossen und angebracht ist, aufgebaut ist, wobei das tiefe Glied (512)
- die Bewehrung (11) des Sitzteils,
- einen Zirkel (52), der einerseits aus einem oberen Schenkel (521) mit zwei Enden (5211, 5212), von denen das erste Ende (5211) in der Nähe des vorderen Endes (5121) des unteren Glieds (512) gehalten wird, und andererseits aus einem unteren Schenkel (522) mit zwei Enden (5222, 5221) besteht, von denen das erste Ende (5222) schwenkbar in Bezug auf das zweite Ende (5212) des oberen Schenkels (521) angeschlossen und angebracht ist, und das zweite Ende (5221) schwenkbar in Bezug auf das Gestell (30) gehalten und angebracht ist, besteht,
- einen Nocken (56), welcher ein bestimmtes Profil aufweist, und
- einen Gegennocken (57), der mit diesem Nocken (56) zusammenwirkt, wobei der eine von Nocken (56) und Gegennocken (57) dem Gestell (30) und der andere von Nocken (56) und Gegennocken (57) dem oberen Glied (511) zugeordnet ist.

2. Sitz nach Anspruch 1, dadurch gekennzeichnet, daß der Zirkel (52) an der Innenseite des Gestells (30) angebracht ist.

3. Sitz nach irgendeinem der Ansprüche 1 und 2, dadurch gekennzeichnet, daß der Stangensatz (51) an der Außenseite des Gestells (30) angeordnet ist.

4. Sitz nach irgendeinem der Ansprüche 1 und 2, dadurch gekennzeichnet, daß der Nocken (56) an dem oberen Glied (511) sitzt und der Gegennocken (57) dem Gestell (30) zugeordnet ist.

5. Sitz nach irgendeinem der Ansprüche 1 bis 4, dadurch gekennzeichnet, daß das Gestänge (50) doppelt und der rechten und linken Seite eines Sitzes zugeordnet ist.

6. Sitz nach irgendeinem der Ansprüche 1 bis 5, dadurch gekennzeichnet, daß das Gestell (30) wenigstens einen vorderen Fuß (31) und wenigstens einen hinteren Fuß (32) aufweist, daß der vordere Fuß (31) das Gelenk (40) und den unteren Schenkel (522) trägt und daß der hintere Fuß (32) beweglich an der Bewehrung (11) des Sitzteils angebracht ist.

7. Sitz nach irgendeinem der Ansprüche 1 bis 6, dadurch gekennzeichnet, daß das Gestell (30) beweglich, sogar lösbar an einem Boden angebracht ist.

8. Sitz nach irgendeinem der Ansprüche 1 bis 7, dadurch gekennzeichnet, daß das Profil (561) des Nockens (56) ein stumpfes V ist.

9. Sitz nach irgendeinem der Ansprüche 1 bis 8, dadurch gekennzeichnet, daß das Ende (5211) des oberen Schenkels (521) des Zirkels (52) schwenkbar in der Nähe des vorderen Endes (5121) des unteren Glieds (512) angebracht ist, daß das Ende (5221) des unteren Schenkels (522) mit einer Verlängerung (5223) versehen ist, daß er eine elastische Belastung (53), welche auf diese Schenkel (521, 522) des Zirkels (52) wirkt und diese zu schließen trachtet, Anschläge (54), die an dem unteren Glied (512) und beiderseits des oberen Schenkels (521) angeordnet sind, um dessen Ausschläge zu begrenzen, einen Anschlag (55), der an dem Gestell (30) und an der einen Seite der Verlängerung (5223) zur Begrenzung von deren Weg angeordnet ist, aufweist.

10. Verwendung eines Sitzes nach irgendeinem der Ansprüche 1 bis 9 in einem Kraftfahrzeug des Typs "un volume" oder "monospace".
